# EUROPEAN PATENT APPLICATION

(11) **EP 4 401 468 A1**
(43) Date of publication of application: **17.07.2024**
(21) Application number: 21956345.9
(22) Date of filing: 08.09.2021
(51) Int. Cl.: H04W 36/00

(54) **CELL RESELECTION METHOD AND DEVICE AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2021/117300
(87) International publication number: WO 2023/035157

(57) **Abstract**

The present invention relates to the field of communications, and provides a cell reselection method and device and a storage medium. The cell reselection method is executed by a terminal, and comprises: determining that a target cell does not support one or more network slices of the terminal; and determining whether to reselect the target cell and/or a same-frequency cell of the target cell. By means of the present invention, a slice-based cell reselection solution in the scenario of being unable to access due to the target cell does not support terminal slices is implemented.

## Description

### FIELD

The present disclosure relates to a field of communication technologies, in particular to a cell reselection method, apparatus and storage medium.

### BACKGROUND

In the related communication technology, the terminal needs to reselect the cell in order to reside in the cell with a higher priority or a better signal quality. In the relevant process of cell reselection, the target cell for reselection is determined based on the reselection condition. For example, the cell reselection is performed based on the S criterion and the R criterion.

After determining the target cell, the terminal can further determine whether the cell is a suitable cell. If the determined target cell is a suitable cell, the terminal reselects to the target cell. If the determined target cell is not a suitable cell, it is determined whether to reselect the target cell subsequently based on the provision of the protocol. For example, a reselection limitation may be executed on the target cell, and the target cell is not reselected. Alternatively, the target cell may be reselected without being subjected to the reselection limitation.

Further, the related communication technology proposes the network slice technology. The network slice technology can provide a complete end-to-end virtual network for specific users. By dividing network resources into multiple network slices, the users with different service requirements (such as delay, reliability, capacity, isolation and other functions) can be provided with differentiated services.

Therefore, how to realize the cell reselection based on the network slice is a trend that needs further research at present.

### SUMMARY

In order to overcome the problems existing in the related art, the present disclosure provides a cell reselection method, apparatus and storage medium.

According to a first aspect of embodiments of the present disclosure, there is provided a cell reselection method, which is executed by a terminal and includes: determining that a target cell does not support one or more network slices of the terminal; and determining whether to reselect the target cell and/or a cell with a same frequency as the target cell.

In an embodiment, the determining whether to reselect the target cell and/or the cell with the same frequency as the target cell includes: determining whether to execute a first reselection limitation on the target cell and/or the cell with the same frequency as the target cell.

In an embodiment, the determining whether to execute the first reselection limitation on the target cell and/or the cell with the same frequency as the target cell includes: determining to execute the first reselection limitation on the target cell and/or the cell with the same frequency as the target cell; and determining not to reselect the target cell and/or the cell with the same frequency as the target cell.

In an embodiment, the determining whether to execute the first reselection limitation on the target cell and/or the cell with the same frequency as the target cell includes: determining not to execute the first reselection limitation on the target cell and/or the cell with the same frequency as the target cell; determining to reselect the target cell and/or the cell with the same frequency as the target cell.

In an embodiment, the first reselection limitation includes at least one of the following: stop taking the target cell as a candidate cell; stopping taking the target cell as a candidate cell; stopping taking the cell with the same frequency as the target cell as the candidate cell; reducing a priority of the target cell; reducing a priority of the cell with the same frequency as the target cell; and reducing a priority of a frequency point corresponding to the target cell.

In an embodiment, the determining whether to execute the first reselection limitation on the target cell and/or the cell with the same frequency as the target cell includes: receiving first indication information sent by a network device, wherein the first indication information is configured to indicate whether to reselect the target cell and/or the cell with the same frequency as the target cell; and determining whether to execute the first reselection limitation on the target cell and/or the cell with the same frequency as the target cell according to the first indication information.

In an embodiment, the first reselection limitation corresponds to a first parameter, and the first parameter includes at least one of the following: a time parameter for executing the first reselection limitation on the target cell and/or the cell with the same frequency as the target cell; the number of times of reselection where the first reselection limitation is executed on the target cell and/or the cell with the same frequency as the target cell.

In an embodiment, the method further includes: determining that a first reselection limitation lifting condition is satisfied; and determining whether to lift the first reselection limitation executed on the target cell and/or the cell with the same frequency as the target cell.

In an embodiment, the determining whether to lift the first reselection limitation executed on the target cell and/or the cell with the same frequency as the target cell includes: re-determining whether a first reselection limitation condition is satisfied, wherein the first reselection limitation condition includes not supporting the one or more network slices of the terminal; determining that the first reselection limitation condition is not satisfied; and lifting the first reselection limitation executed on the target cell and/or the cell with the same frequency as the target cell.

In an embodiment, the first reselection limitation lifting condition includes at least one of the following: the terminal falls back to a process of cell reselection which is not based on the one or more network slices; the terminal performs cell reselection based on other network slices different from a current network slice for cell reselection; the terminal receives a system message update indication; the terminal enters an arbitrary cell selection state; the terminal receives second indication information, wherein the second indication information is configured to indicate whether to lift the executed first reselection limitation; the highest ranked cell changes; the terminal moves out of a tracking area where the terminal is; the terminal move out of a registration area where the terminal is; the terminal receives a redirection message, wherein the redirection message includes a frequency point for which the reselection limitation has been lifted; and a public land mobile network selected by the terminal changes.

In an embodiment, the second indication information is also configured to determine that terminal slice information changes; or the second indication information is also configured to indicate to lift the first reselection limitation.

In an embodiment, the terminal slice information includes at least one of the following: a list of network slices supported by the terminal; a list of frequency points corresponding to the network slices supported by the terminal; a list of priorities of frequency points corresponding to the network slices supported by the terminal; and priorities of the network slices supported by the terminal.

In an embodiment, the determining that the target cell does not support the one or more network slices of the terminal includes: receiving a slice information supported or not supported by the target cell; and determining that the target cell does not support the one or more network slices of the terminal.

According to a second aspect of embodiments of the present disclosure, there is provided a cell reselection method, which is executed by a network device and includes: sending first indication information to a terminal, wherein the first indication information is configured to indicate whether to reselect a target cell and/or a cell with a same frequency as the target cell, wherein the target cell does not support one or more network slices of the terminal.

In an embodiment, the first indication information is further configured to indicate whether the terminal executes a first reselection limitation on the target cell and/or the cell with the same frequency as the target cell.

In an embodiment, the first indication information is specifically configured to indicate the terminal not to reselect the target cell and/or the cell with the same frequency as the target cell when the terminal executes the first reselection limitation.

In an embodiment, the first indication information is specifically configured to indicate the terminal to reselect the target cell and/or the cell with the same frequency as the target cell when the terminal does not execute the first reselection limitation.

In an embodiment, the first reselection limitation includes at least one of the following: stopping taking the target cell as a candidate cell; stopping taking the cell with the same frequency as the target cell as the candidate cell; reducing a priority of the target cell; reducing a priority of the cell with the same frequency as the target cell; and reducing a priority of a frequency point corresponding to the target cell.

In an embodiment, the first reselection limitation corresponds to a first parameter, and the first parameter includes at least one of the following: a time parameter for executing the first reselection limitation on the target cell and/or the cell with the same frequency as the target cell; and the number of times of reselection where the first reselection limitation is executed on the target cell and/or the cell with the same frequency as the target cell.

In an embodiment, the method further includes: sending second indication information to the terminal, wherein the second indication information is configured to indicate whether to lift the executed first reselection limitation.

In an embodiment, the second indication information is also configured to determine that terminal slice information changes; or the second indication information is also configured to indicate to lift the first reselection limitation.

In an embodiment, the method further includes: sending a slice information supported or not supported by the target cell.

According to a third aspect of embodiments of the present disclosure, there is provided a cell reselection apparatus, includes: a processing unit configured to determine that a target cell does not support one or more network slices of a terminal. The processing unit is further configured to determine whether to reselect the target cell and/or a cell with a same frequency as the target cell.

In an embodiment, the processing unit is configured to determine whether to execute a first reselection limitation on the target cell and/or the cell with the same frequency as the target cell.

In an embodiment, the processing unit is configured to determine to execute the first reselection limitation on the target cell and/or the cell with the same frequency as the target cell; and determine not to reselect the target cell and/or the cell with the same frequency as the target cell.

In an embodiment, the processing unit is configured to determine not to execute the first reselection limitation on the target cell and/or the cell with the same frequency as the target cell; and determine to reselect the target cell and/or the cell with the same frequency as the target cell.

In an embodiment, the first reselection limitation includes at least one of the following: stopping taking the target cell as a candidate cell; stopping taking the cell with the same frequency as the target cell as the candidate cell; reducing a priority of the target cell; reducing a priority of the cell with the same frequency as the target cell; reducing a priority of a frequency point corresponding to the target cell.

In an embodiment, the processing unit is configured to receive first indication information sent by a network device, wherein the first indication information is configured to indicate whether to reselect the target cell and/or the cell with the same frequency as the target cell; determine whether to execute the first reselection limitation on the target cell and/or the cell with the same frequency as the target cell according to the first indication information.

In an embodiment, the first reselection limitation corresponds to a first parameter, and the first parameter includes at least one of the following: a time parameter for executing the first reselection limitation on the target cell and/or the cell with the same frequency as the target cell; and the number of times of reselection where the first reselection limitation is executed on the target cell and/or the cell with the same frequency as the target cell.

In an embodiment, the processing unit is configured to determine that a first reselection limitation lifting condition is satisfied, and determine whether to lift the first reselection limitation executed on the target cell and/or the cell with the same frequency as the target cell.

In an embodiment, the processing unit is configured to: re-determine whether a first reselection limitation condition is satisfied, wherein the first reselection limitation condition includes not supporting one or more network slices of the terminal; determine that the first reselection limitation condition is not satisfied; lift the first reselection limitation executed on the target cell and/or the cell with the same frequency as the target cell.

In an embodiment, the first reselection limitation lifting condition includes at least one of the following: the terminal falls back to a process of cell reselection which is not based on the one or more network slices; the terminal performs cell reselection based on other network slices different from a current network slice for cell reselection; the terminal receives a system message update indication; the terminal enters an arbitrary cell selection state; the terminal receives second indication information, wherein the second indication information is configured to indicate whether to lift the executed first reselection limitation; a highest ranked cell changes; the terminal moves out of a tracking area where the terminal is; the terminal move out of a registration area where the terminal is; the terminal receives a redirection message, wherein the redirection message includes a frequency points for which the reselection limitation has been lifted; and a public land mobile network selected by the terminal changes.

In an embodiment, the second indication information is also configured to determine that terminal slice information changes; or the second indication information is also configured to indicate to lift the first reselection limitation.

In an embodiment, the terminal slice information includes at least one of the following: a list of network slices supported by the terminal; a list of frequency points corresponding to the network slices supported by the terminal; a list of priorities of frequency points corresponding to the network slices supported by the terminal; priorities of the network slices supported by the terminal.

In an embodiment, the processing unit is configured to receive a slice information supported or not supported by the target cell, and determine that the target cell does not support one or more the network slices of the terminal.

According to a fourth aspect of embodiments of the present disclosure, there is provided a cell reselection apparatus, including: a sending unit configured to send first indication information to a terminal, wherein the first indication information is configured to indicate whether to reselect a target cell and/or a cell with a same frequency as the target cell, wherein the target cell does not support one or more network slices of the terminal.

In an embodiment, the first indication information is further configured to indicate whether the terminal executes a first reselection limitation on the target cell and/or the cell with the same frequency as the target cell.

In an embodiment, the first indication information is specifically configured to indicate the terminal not to reselect the target cell and/or the cell with the same frequency as the target cell when the terminal executes the first reselection limitation.

In an embodiment, the first indication information is specifically configured to indicate the terminal to reselect the target cell and/or the cell with the same frequency as the target cell when the terminal does not execute the first reselection limitation.

In an embodiment, the first reselection limitation includes at least one of the following: stopping taking the target cell as a candidate cell; stopping taking the cell with the same frequency as the target cell as the candidate cell; reducing a priority of the target cell; reducing a priority of the cell with the same frequency as the target cell; reducing a priority of a frequency point corresponding to the target cell.

In an embodiment, the first reselection limitation corresponds to a first parameter, and the first parameter includes at least one of the following: a time parameter for executing the first reselection limitation on the target cell and/or the cell with the same frequency as the target cell; and the number of times of reselection where the first reselection limitation is executed on the target cell and/or the cell with the same frequency as the target cell.

In an embodiment, the sending unit is further configured to send second indication information to the terminal, and the second indication information is configured to indicate whether to lift the executed first reselection limitation.

In an embodiment, the second indication information is also configured to determine that terminal slice information changes; or the second indication information is also configured to indicate to lift the first reselection limitation.

In an embodiment, the sending unit is further configured to send a slice information supported or not supported by the target cell.

According to a fifth aspect of embodiments of the present disclosure, there is provided a communication apparatus, including: a processor; and a memory for storing instructions executable by the processor. The processor is configured to execute the cell reselection method described in the first aspect or any one of the embodiments of the first aspect.

According to a sixth aspect of embodiments of the present disclosure, there is provided a communication apparatus, including: a processor; and a memory for storing instructions executable by the processor. The processor is configured to execute the cell reselection method described in the second aspect or any one of the embodiments of the second aspect.

According to a seventh aspect of embodiments of the present disclosure, there is provided a storage medium in which instructions are stored. When the instructions in the storage medium are executed by a processor of a terminal, the terminal is enabled to perform the cell reselection method described in the first aspect or any one of the embodiments of the first aspect.

According to an eighth aspect of embodiments of the present disclosure, there is provided a storage medium in which instructions are stored. When the instructions in the storage medium are executed by a processor of a network device, the network device is enabled to execute the cell reselection method described in the second aspect or any one of the embodiments of the second aspect.

The technical solution provided by the embodiments of the present disclosure can include the following beneficial effects: when the terminal determines that the target cell does not support one or more network slices of the terminal, it is determined whether to reselect the target cell and/or the cell with the same frequency as the target cell, thus realizing the cell reselection solution based on the slices in the scene that the target cell cannot be accessed because it does not support the slices of the terminal.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.
Fig. 1 is an architecture diagram of a wireless communication system according to an illustrative embodiment.
Fig. 2 is a flow chart of a cell reselection method according to an illustrative embodiment.
Fig. 3 is a flow chart of a cell reselection method according to an illustrative embodiment.
Fig. 4 is a flow chart of a cell reselection method according to an illustrative embodiment.
Fig. 5 is a flow chart of a cell reselection method according to an illustrative embodiment.
Fig. 6 is a flow chart of a cell reselection method according to an illustrative embodiment.
Fig. 7 is a flow chart of a cell reselection method according to an illustrative embodiment.
Fig. 8 is a flow chart of a cell reselection method according to an illustrative embodiment.
Fig. 9 is a block diagram of a cell reselection apparatus according to an illustrative embodiment.
Fig. 10 is a block diagram of a cell reselection apparatus according to an illustrative embodiment.
Fig. 11 is a block diagram of an apparatus for cell reselection according to an illustrative embodiment.
Fig. 12 is a block diagram of an apparatus for cell reselection according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The embodiments described in the following illustrative examples do not represent all embodiments consistent with the present disclosure. Rather, they are merely examples of devices and methods consistent with some aspects of the present disclosure as detailed in the appended claims.

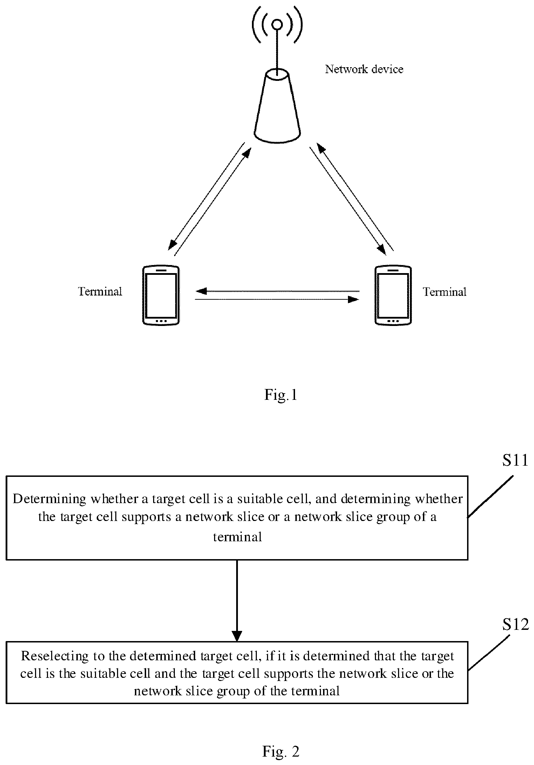

A cell reselection method provided by the embodiments of the present disclosure can be applied to a wireless communication system shown in Fig. 1. Referring to Fig. 1, the wireless communication system includes a terminal and a network device. Information is sent and received between the terminal and the network device through wireless resources.

It can be understood that the wireless communication system shown in Fig. 1 is only a schematic illustration, and the wireless communication system may also include other network devices, such as core network devices, wireless relay devices and wireless backhaul devices, which are not shown in Fig. 1. The embodiments of the present disclosure do not limit the numbers of the network devices and the terminals included in the wireless communication system.

It can be further understood that the wireless communication system of the embodiments of the present disclosure is a network providing wireless communication functions. The wireless communication system can adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to the capacities, speeds, delays and other factors of different networks, the networks can be divided into 2G (generation) network, 3G network, 4G network or a future evolution network, such as 5G network, which can also be called New Radio (NR). For convenience of description, the wireless communication network is sometimes referred to as the network in the present disclosure.

Further, the network device involved in the present disclosure can also be called a wireless access network device. The wireless access network device can be a base station, an evolved node B, a home base station, an access point (AP) in a wireless fidelity (WIFI) system, a wireless relay node, a wireless backhaul node, a transmission point (TP), or a transmission and reception point (TRP), etc., and it can also be gNB in the NR system, or it can also be a component or part of the device that constitutes the base station. When it is a vehicle networking (V2X) communication system, the network device can also be a vehicle-mounted device. It should be understood that in the embodiments of the present disclosure, there is no limitation on the specific technology and the specific device form adopted by the network device.

Further, the terminal involved in the present disclosure can also be called a terminal device, a user equipment (UE), a mobile station (MS), a mobile terminal (MT), etc., which is a device that provides voice and/or data connectivity to users. For example, the terminal can be a handheld device with a wireless connection function, a vehicle-mounted device, etc. At present, some examples of terminals are: mobile phones, pocket personal computers (PPC), palmtop computers, personal digital assistants (PDA), notebook computers, tablet computers, wearable devices, or vehicle-mounted devices. In addition, when it is a vehicle networking (V2X) communication system, the terminal device can also be a vehicle-mounted device. It should be understood that the embodiments of the present disclosure do not limit the specific technology and the specific device form adopted by the terminal.

During the communication between the terminal and the network device, a cell will be selected or reselected. The embodiments of the present disclosure are mainly applicable to a process of cell reselection. When the terminal is in an idle state or an inactive state, the cell reselection needs to be continuously carried out so as to reside in a cell with a higher priority or a better signal quality. By setting different frequency priorities, the network device can control the terminal to reside. The terminal will select the cell with the best signal quality at a certain frequency point so as to provide better services.

In the related art, the cell reselection can be divided into same-frequency cell reselection and different-frequency cell reselection. The same-frequency cell reselection is mainly used to solve the wireless coverage problem, while the different-frequency cell reselection can be used to solve both the wireless coverage problem and also be used for load balancing. In the 38.304 protocol, the criteria of the different-frequency cell reselection mainly include the following.

The terminal obtains a frequency priority by broadcasting system messages or releasing messages through radio resource control (RRC), and performs the cell reselection based on the frequency priority. The cell reselection based on the frequency priority mainly involves a high priority frequency cell reselection, an equal priority frequency cell reselection and a low priority frequency cell reselection. The criteria for the cell reselection with different frequency priorities will be explained in the following.

For the high priority frequency cell reselection, if the terminal resides in a current serving cell for more than 1s, and there is a cell with high priority frequency points, which meets Sᵣₓₗₑᵥ > Thresh_{X}, _{HighP} or S_{qual} > Thresh_{X}, _{HighQ} within a set time (Treselection_{RAT}), the terminal will perform the high priority frequency cell reselection. Sᵣₓₗₑᵥ is a cell selection level and S_{qual} is a cell selection quality. Thresh_{X, HighP} is a level threshold of the cell with high priority frequency points, and Thresh_{X, HighQ} is a quality threshold of the cell with high priority frequency points. For the low priority frequency cell reselection, when the terminal resides in the current serving cell for more than 1s, if the current serving cell meets Sᵣₓₗₑᵥ < Thresh_{Serving, LowP} and there is a low priority frequency cell, which meets Sᵣₓₗₑᵥ > Tbresh_{X, LowP} in Treselection_{RAT}, the terminal will perform the low priority frequency cell reselection. Or, if the current serving cell satisfies S_{qual} < Thresh_{Serving, LowQ} and there is a low priority frequency cell, which satisfies S_{qual} > Tbresh_{X, LowQ} in Treselection_{RAT}, the terminal will perform the low priority frequency cell reselection. Thresh_{Serving, LowP} is a level threshold of the serving cell reselected to the cell with low priority frequency points, Tbresh_{X, LowP} is a level threshold of the cell with low priority frequency points, Thresh_{Serving, LowQ} is a quality threshold of the serving cell reselected to the cell with low priority frequency points, and Tbresh_{X, LowQ} is a quality threshold of the cell with low priority frequency points.

For the equal priority frequency cell reselection, same as the criteria for the same frequency cell reselection, all cells with the equal priority frequency are sorted according to the R criterion, and the highest ranked cell according to the R criterion is selected. The R criterion mainly refers to: Rs = Q_{meas,s} +Q_{hyst}-Q_{offsettemp}, Rn = Q_{meas,n}-Q_{offset}- Qoffsettemp.

Rs is a R value of the serving cell, Rn is a R value of a neighboring cell, Q_{meas,s} is a RSRP measurement value of the serving cell, Q_{meas,n} is a RSRP measurement value of the neighboring cell, Q_{hyst} is a cell reselection hysteresis value, Q_{offsettemp} is a temporary offset value, and Q_{offset} is an offset value.

Further, if there are a plurality of cells that meet the reselection condition, the terminal sorts all the cells that meet the S criterion and meet the reselection conditions according to the R criterion, and selects the highest ranked cell, and the high priority frequency cell ranks higher than the low priority frequency cell.

If the highest ranked cell is not a suitable cell, the terminal will not consider this cell, or this cell and all cells with the same frequency as this cell when performing the cell reselection within 300s or at most 300s. The S criterion mainly refers to Sᵣₓₗₑᵥ > 0 and S_{qual}> 0. Sᵣₓₗₑᵥ is the cell selection level and S_{qual} is the cell selection quality. The cell selected or reselected by the terminal needs to meet the S criterion.

In the related art, in the cell reselection process, the terminal determines the reselected target cell based on the reselection condition and the R criterion, reads a Master Information Block (MIB) and a System Information Block 1 (SIB1) of the target cell, and judges whether the target cell is a suitable cell based on parameters in the MIB and SIB1. If the target cell is a suitable cell, the terminal will reselect to the target cell. If the target cell is not a suitable cell, a subsequent behavior is determined according to the protocol. This subsequent behavior can be understood as determining that the reselection limitation is carried out on the target cell and/or other cells with the same frequency, and the reselection limitation mainly includes the following:

(1) Because a MIB message of the master information block (MIB) cannot be obtained, the cell is regarded as a barred cell, and this cell can be excluded from the reselection candidate cells for up to 300s. If the other cells with the same frequency meet the reselection condition, the terminal can reselect to other cells.

(2) If the target cell is indicated or regarded as the barred cell for reasons other than the inability to obtain the MIB message, the cell is excluded from the reselection candidate cells for 300s, and it is determined whether to allow the other cells with the same frequency to be reselected based on the indication in the MIB message. If the other cells with the same frequency are allowed to be reselected, the terminal can reselect to the other cells with the same frequency. When the other cells with the same frequency are not allowed to be reselected, if they are authorized frequency band cells or a public land mobile network (PLMN) of the cells meets the condition, the other cells with the same frequency will be stopped from reselection for 300s. Otherwise, the terminal can reselect to the other cells with the same frequency.

(3) Because the PLMN, a tracking area (TA) and a CAG do not meet the requirements, the terminal excludes this cell and all the cells with the same frequency from the reselection candidate cells for at most 300s.

Further, in the related art, the reselection limitation can also be lifted for the target cell. For example, for the above reselection limitation (1) and (2), if the highest ranked cell changes, the reselection limitation is lifted. For the above reselection limitation (3), if the terminal enters any cell selection state, the reselection limitation is lifted. For another example, if the network device controls the terminal to redirect to a certain frequency point, the reselection limitation is lifted for the frequency point cell.

Furthermore, the network slice technology is proposed in related communication technologies. The network slice technology can provide a complete end-to-end virtual network for specific users. By dividing network resources into a plurality of network slices, the users with different service requirements (such as delay, reliability, capacity, isolation and other functions) can be provided with differentiated services.

The network device can configure the network slice supported or unsupported by the target cell to realize the cell reselection based on the network slice. However, the cell reselection solution based on the network slice has not been realized in the related art.

In view of this, the embodiment of the present disclosure provides a cell reselection method, and a cell reselection solution based on a network slice is realized in the cell reselection method. In the cell reselection solution based on the network slice, the terminal can determine the network slice of the terminal, the network slice of the terminal can include one or more network slices supported by the terminal. A plurality of network slices supported by the terminal can also be understood as a network slice group supported by the terminal. That is, the embodiments of the present disclosure provide a network slice-based cell reselection based on the network slice or the network slice group of the terminal.

It should be noted that the network slice of the terminal involved in the following embodiments of the present disclosure can be understood as a network slice used by the terminal when determining a reselection priority and performing the cell reselection. One or more network slices can be used when the terminal performs the cell reselection.

For example, the network slices supported by the terminal are slice 1 and slice 2. In the cell reselection process performed by the terminal based on the frequency priority corresponding to slice 1, the network slice of the terminal is slice 1. In the cell reselection process performed by the terminal based on the frequency priority corresponding to slice 2, the network slice of the terminal is slice 2. In the cell reselection process performed by the terminal based on the frequency priorities determined by slice 1 and slice 2, the network slices of the terminal are slice 1 and slice 2.

It should be noted that the embodiment of the present disclosure is only an illustrative description, and the way of determining the network slice of the terminal in the present disclosure is not limited to this.

In the embodiments of the present disclosure, the terminal may adopt the solution of the cell reselection based on the frequency priority in the related art to determine whether the target cell is a suitable cell. If the target cell is the suitable cell, the terminal can determine whether to reselect the target cell and/or the cell with the same frequency as the target cell based on the slice information of the target cell and the network slice or the slice group of the terminal.

Fig. 2 is a flow chart of a cell reselection method according to an illustrative embodiment. As shown in Fig. 2, the cell reselection method is executed by a terminal and includes the following steps.

In step S11, it is determined whether a target cell is a suitable cell and whether the target cell supports a network slice or a network slice group of the terminal.

In step S12, if it is determined that the target cell is the suitable cell, and the target cell supports the network slice or the network slice group of the terminal, the terminal reselects to the determined target cell.

In an embodiment, the target cell involved in the embodiment of the present disclosure is a target cell determined in a cell reselection process based on a frequency priority.

In another embodiment, the network slice is related to a frequency priority, and a cell reselection process is performed based on the frequency priority to determine the target cell.

In the embodiments of the present disclosure, the network slice or the network slice group of the terminal may be determined by slice information of a network slice supported by the terminal, for example, by a network slice list supported by the terminal. In an example, the network slice or the network slice group of the terminal used for the cell reselection in the embodiment of the present disclosure may be one or more network slices in the network slice list supported by the terminal.

The slice information of the network slice supported by the terminal may be a network slice identifier, a network slice group identifier or other identifiers, which are not limited by the embodiments of the present disclosure.

It is determined whether the target cell supports the network slice or the network slice group of the terminal, so that the cell reselection based on the network slice can be performed based on slice information of the target cell. The slice information of the target cell includes slice information of a network slice supported by the target cell or slice information of a network slice not supported by the target cell.

Further, the slice information of the network slice supported or not supported by the target cell can be provided to the terminal by the network device. The slice information of the network slice supported or not supported by the target cell can be provided by the network device based on system information of the target cell, or based on system information of a serving cell, or based on a proprietary signaling. The terminal determines the slice information of the network slice supported or not supported by the target cell based on at least one of the system information of the target cell, or the system information of the serving cell, or the proprietary signaling.

In the embodiments of the present disclosure, the slice information of the network slice supported or not supported by the target cell may be a network slice identifier, a network slice group identifier, or other identifiers, which are not limited by the embodiments of the present disclosure here.

In a cell reselection method provided by the embodiments of the present disclosure, after it is determined that the target cell is not the suitable cell and/or the target cell does not support the network slice or the network slice group of the terminal, it is further determined whether to reselect the target cell and/or a cell with a same frequency as the target cell.

In an embodiment, when it is determined that the target cell does not support the network slice or the network slice group of the terminal, it is determined whether to reselect the target cell and/or the cell with the same frequency as the target cell.

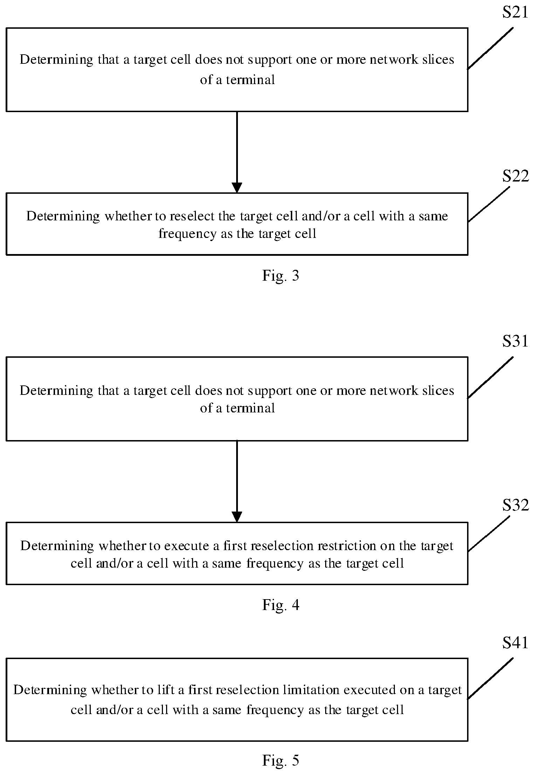

Fig. 3 is a flow chart of a cell reselection method according to an illustrative embodiment. As shown in Fig. 3, the cell reselection method is executed by a terminal and includes the following steps.

In step S21, it is determined that a target cell does not support one or more network slices of the terminal.

In step S22, it is determined whether to reselect the target cell and/or a cell with a same frequency as the target cell.

The target cell involved in the embodiments of the present disclosure is a target cell determined in a cell reselection process based on a frequency priority. For example, the target cell is the target cell determined in the cell reselection process based on the frequency priority related to the slice.

In the embodiments of the present disclosure, the terminal receives slice information of a network slice supported or not supported by the target cell. The terminal determines that the target cell does not support one or more network slices of the terminal, which can be determined based on the slice information of the network slice supported or not supported by the target cell. The slice information of the network slice supported or not supported by the target cell may be a network slice identifier, a network slice group identifier, or other identifiers. One or more network slices of the terminal can be understood as a network slice or a network slice group determined based on network slice information supported by the terminal. For example, one or more network slices of the terminal may be one or more network slices in a network slice list supported by the terminal.

In an example, it is assumed that the network slice supported by the target cell includes Slice 1, Slice 2 and Slice 3. One network slice of the terminal includes Slice 4, or a plurality of network slices of the terminal include {Slice 4, Slice 5, Slice 6}. Then, the target cell does not support one or more network slices of the terminal.

In the embodiments of the present disclosure, in case that it is determined that the target cell does not support one or more network slices of the terminal, it may be further determined whether to reselect the target cell and/or the cell with the same frequency as the target cell.

In an implementation of the embodiments of the present disclosure, determining whether to reselect the target cell and/or the cell with the same frequency as the target cell can be performed by determining whether to execute reselection limitation on the target cell and/or the cell with the same frequency as the target cell.

For convenience of description, the reselection limitation executed in the case that one or more network slices of the terminal are not supported for the target cell in the embodiments of the present disclosure will be referred to as a first reselection limitation. The reselection limitation on the target cell in the case that the target cell does not meet the suitable cell in the related art is referred to as a second reselection limitation. For example, the second reselection limitation may be a reselection limitation involved in a legacy cell reselection process.

The first reselection limitation involved in the embodiment of the present disclosure includes at least one of the following:
(1) Stopping taking the target cell as a candidate cell;
(2) Stopping taking the cell with the same frequency as the target cell as the candidate cell;
(3) Reducing a priority of the target cell;
(4) Reducing a priority of the cell with the same frequency as the target cell;
(5) Reducing a priority of a frequency point corresponding to the target cell.

Fig. 4 is a flow chart of a cell reselection method according to an illustrative embodiment. As shown in Fig. 4, the cell reselection method is executed by a terminal and includes the following steps.

In step S31, it is determined that the target cell does not support one or more network slices of the terminal.

In the embodiments of the present disclosure, the target cell is a target cell determined in a cell reselection process based on a frequency priority. For example, the target cell is the target cell determined in the cell reselection process based on the frequency priority related to the slice. The terminal may determine that the target cell does not support one or more network slices of the terminal based on slice information of a network slice supported or not supported by the target cell.

In step S32, it is determined whether to execute a first reselection limitation on the target cell and/or a cell with a same frequency as the target cell.

In the embodiments of the present disclosure, in case that it is determined that the target cell does not support one or more network slices of the terminal, it may be further determined whether to execute the first reselection limitation on the target cell and/or the cell with the same frequency as the target cell.

In the embodiments of the present disclosure, on the one hand, in case that it is determined to execute the first reselection limitation on the target cell and/or the cell with the same frequency as the target cell, it is determined that the target cell and/or the cell with the same frequency as the target cell will not be reselected. On the other hand, in case that it is determined not to execute the first reselection limitation on the target cell and/or the cell with the same frequency as the target cell, it is determined that the target cell and/or the cell with the same frequency as the target cell will be reselected.

In an implementation of the embodiments of the present disclosure, the terminal may determine whether to execute the first reselection limitation on the target cell and/or the cell with the same frequency as the target cell based on the provision of the protocol. In another implementation of the embodiments of the present disclosure, the terminal may also receive indication information sent by the network device, and determine whether to execute the first reselection limitation on the target cell and/or the cell with the same frequency as the target cell based on the indication information sent by the network device.

In the embodiments of the present disclosure, for convenience of description, the indication information for indicating whether to execute the first reselection limitation on the target cell and/or the cell with the same frequency as the target cell may be referred to as first indication information. The first indication information is used to indicate whether to reselect the target cell and/or the cell with the same frequency as the target cell.

The first indication information may include a broadcast system message or may also include a proprietary signaling.

Based on the contents included in the first reselection limitation, the first reselection limitation involved in the embodiments of the present disclosure may include the following examples.

Example 1: the protocol stipulates to stop taking the target cell as a candidate cell.

Example 2: the protocol stipulates to stop taking the target cell and other cells with the same frequency as candidate cells.

Example 3: the protocol stipulates to stop taking the target cell as a candidate cell, and to indicate whether to stop taking other cells with the same frequency as candidate cells through the first indication information.

Example 4: the protocol stipulates to reduce a priority of the target cell.

Example 5: the protocol stipulates to reduce a priority of a frequency point of the target cell.

Example 6: the network device sends the first indication information to indicate to stop taking the target cell as a candidate cell.

Example 7: the network device sends the first indication information to indicate to stop taking the target cell and other cells with the same frequency as candidate cells.

Example 8: the network device sends the first indication information to indicate to reduce a priority of the target cell.

Example 9: the network device sends the first indication information to indicate to reduce a priority of a frequency point of the target cell.

It can be understood that reducing the priority of the target cell, or reducing the priority of the cell with the same frequency as the target cell, or reducing the priority of the frequency point corresponding to the target cell in the embodiments of the present disclosure can be understood as reducing the priority of the target cell, the priority of the cell with the same frequency as the target cell or the priority of the frequency point corresponding to the target cell by N levels, where N is a positive integer, for example, N is 1 or can be another value. In an example, in the embodiments of the present disclosure, the priority of the target cell, the priority of the cell with the same frequency as the target cell or the priority of the frequency point corresponding to the target cell can be reduced to the lowest priority, that is, minimizing the possibility that the target cell, the cell with the same frequency as the target cell or the frequency point corresponding to the target cell becomes the candidate cell.

It can be further understood that the examples related to the first reselection limitation mentioned above in the embodiments of the present disclosure are only illustratively described, and the embodiments of the present disclosure are not limited to thereto, and can also include other examples or combinations of examples. For example, the embodiments of the present disclosure may include an example in which the priority of the cell with the same frequency as the target cell is individually reduced to execute the first reselection limitation on the cell with the same frequency as the target cell.

In the embodiments of the present disclosure, when determining whether to execute the first reselection limitation on the target cell and/or the cell with the same frequency as the target cell, if the protocol stipulates or the first indication information indicates to stop taking the target cell and/or the cell with the same frequency as the target cell as the candidate cell, it can be determined to execute the first reselection limitation on the target cell and/or the cell with the same frequency as the target cell. Or, the protocol stipulates or the first indication information indicates to reduce the priority of the target cell and/or the priority of the cell with the same frequency as the target cell, it can be determined to execute the first reselection limitation on the target cell and/or the cell with the same frequency as the target cell. If the protocol does not stipulate to stop taking the target cell and/or the cell with the same frequency as the target cell as the candidate cell, nor does it stipulate to reduce the priority of the target cell and/or the priority of the cell with the same frequency as the target cell, and the first indication information does not indicate to stop taking the target cell and/or the cell with the same frequency as the target cell as the candidate cell, nor does it indicate to reduce the priority of the target cell and the priority of the cell with the same frequency as the target cell, then it can be determined that the first reselection limitation should not be executed on the target cell and/or the cell with the same frequency as the target cell.

In the embodiments of the present disclosure, the execution/non-execution of the first reselection limitation on the target cell and/or the cell with the same frequency as the target cell can be understood as a cell reselection process based on the terminal slice, that is, the reselection limitation is a per slice limitation. In an example, the terminal performs the cell reselection based on slice 1. If a certain frequency/cell is stopped from reselection because it does not support slice 1, the limitation only applies to the cell reselection process based on slice 1. When the terminal performs the cell reselection based on slice 2, the terminal ignores all the reselection limitations in the cell reselection based on other slices (slice 1).

In an implementation of the embodiments of the present disclosure, the first reselection limitation involved in the above embodiments may be configured with a corresponding parameter, which will be referred to as a first parameter hereinafter. The first parameter may include at least one of the following: a time parameter for executing the first reselection limitation on the target cell and/or the cell with the same frequency as the target cell, and/or the number of times of reselection where the first reselection limitation is executed on the target cell and/or the cell with the same frequency as the target cell. That is, in case that it is determined to execute the first reselection limitation on the target cell and/or the cell with the same frequency as the target cell, the first reselection limitation is executed on the target cell and/or the cell with the same frequency as the target cell within the time specified by the above time parameter and/or within the number of times of reselection specified by the reselection parameter.

In the embodiments of the present disclosure, the first parameter corresponding to the first reselection limitation may be determined based on the serving cell system message of the terminal, or may also be determined based on the proprietary signaling, or may also be determined based on the protocol.

In an implementation of the embodiments of the present disclosure, the time parameter for executing the first reselection limitation on the target cell and/or the cell with the same frequency as the target cell includes a time for executing the first reselection limitation on the target cell and/or the cell with the same frequency as the target cell. For example, if the time indicated by the time parameter is 300s, the time parameter for performing the first reselection limitation on the target cell and/or the cell with the same frequency as the target cell may include stopping taking the target cell and/or the cell with the same frequency as the target cell as the candidate cell within 300s. That is, the terminal stops taking the target cell and/or the cell with the same frequency as the target cell as the candidate cell within 300s.

In another implementation of the embodiments of the present disclosure, the time parameter for executing the first reselection limitation on the target cell and/or the cell with the same frequency as the target cell includes a maximum time for executing the first reselection limitation on the target cell and/or the cell with the same frequency as the target cell. For example, the maximum time is 300s, and the time parameter for executing the first reselection limitation on the target cell and/or the cell with the same frequency as the target cell may include that the maximum time for stopping taking the target cell and/or the cell with the same frequency as the target cell as the candidate cell is 300s. That is, the terminal can determine a time less than or equal to 300s, and stop taking the target cell and/or the cell with the same frequency as the target cell as the candidate cell within the determined time.

In an implementation of the embodiments of the present disclosure, the number of times of reselection where the first reselection limitation is executed on the target cell and/or the cell with the same frequency as the target cell includes the number of times of reselection where the first reselection limitation is executed on the target cell and/or the cell with the same frequency as the target cell. For example, if the number of times of reselection indicated by the number of times of reselection is M, the number of times of reselection where the first reselection limitation is executed on the target cell and/or the cell with the same frequency as the target cell may include stopping taking the target cell and/or the cell with the same frequency as the target cell as the candidate cell within M times. That is, the terminal cannot take the target cell and/or the cell with the same frequency as the target cell as the candidate cell in the process of performing M times of reselection.

In another implementation of the embodiments of the present disclosure, the number of times of reselection where the first reselection limitation is executed on the target cell and/or the cell with the same frequency as the target cell includes a maximum number of times of reselection where the first reselection limitation is executed on the target cell and/or the cell with the same frequency as the target cell. For example, the maximum number of times of reselection is M, and the number of times of reselection where the first reselection limitation is executed on the target cell and/or the cell with the same frequency as the target cell may include that the maximum number of times of reselection where the target cell and/or the cell with the same frequency as the target cell are stopped from being taken as the candidate cell is M. That is, the terminal can determine the number of times of reselection less than or equal to M, and stop taking the target cell and/or the cell with the same frequency as the target cell as the candidate cell within the determined number of times of reselection. For example, the target cell and/or the cell with the same frequency as the target cell subjected to the first reselection limitation cannot be taken as the candidate cell within N times of reselection. N is less than or equal to M.

In an example, the network device configures the indication information by the broadcast system message or the proprietary signaling, and the terminal receives the indication information and determines whether to allow the terminal to reselect to the other cells with the same frequency based on this indication information. If the reselection to the other cells with the same frequency is allowed, only the reselection of the current target cell will be stopped within a period of time (300s) or a certain number of times of cell reselection. If the reselection to the other cells with the same frequency is not allowed, the reselection of the current target cell and all the cells with the same frequency will be stopped within a period of time (300s) or a certain number of times of cell reselection.

The cell reselection method provided by the embodiments of the present disclosure also provides a solution for lifting the reselection limitation in case that the target cell does not support one or more network slices of the terminal, that is, a solution for lifting the first reselection limitation from the target cell and/or the cell with the same frequency as the target cell is provided.

Fig. 5 is a flow chart of a cell reselection method according to an illustrative embodiment. As shown in Fig. 5, the cell reselection method is executed by a terminal and includes the following steps.

In step S41, it is determine that whether to lift the first reselection limitation executed on the target cell and/or the cell with the same frequency as the target cell.

The target cell involved in the embodiments of the present disclosure is a target cell determined in a cell reselection process based on a frequency priority. For example, the target cell is the target cell determined in the cell reselection process based on the frequency priority related to the slice.

In an implementation of the embodiment of the present disclosure, it is determined whether to lift the first reselection limitation executed on the target cell and/or the cell with the same frequency as the target cell based on a first reselection limitation lifting condition.

The first reselection limitation lifting condition involved in the embodiments of the present disclosure may include at least one of the following.
A: The terminal falls back to the process of cell reselection which is not based on one or more network slices of the terminal.
   For example, when the terminal falls back to the legacy cell reselection process, it is understood that the first reselection limitation lifting condition is satisfied.
B: The terminal performs the cell reselection based on other network slices different from the current network slice for the cell reselection.
   For example, when the terminal switches from the cell reselection based on slice 1 to the cell reselection based on slice 2, it is understood that the first reselection limitation lifting condition is satisfied.
C: The terminal receives a system message update indication.

Example 1: when the terminal receives the system message update indication, it is determined that the first reselection limitation lifting condition is met.

Example 2: when the terminal receives the system message update indication, the system message is re-read, it is determined that the slice information supported or not supported by the cell is updated, and it is determined that the first reselection limitation lifting condition is met.

D: The terminal enters an arbitrary cell selection state.

For example, when the terminal enters the arbitrary cell selection state, it is determined that the first reselection limitation lifting condition is satisfied.

E: The terminal receives an indication information (hereinafter referred to as second indication information) for determining to lift the first reselection limitation.

The second indication information is used to indicate whether to lift the first reselection limitation. The second indication information includes at least one of the system broadcast message, the proprietary signaling, and an indication information sent by the terminal non-access layer (NAS) to the terminal access layer (AS).

Further, in the embodiments of the present disclosure, on the one hand, the second indication information may directly indicate that the first reselection limitation is lifted, and on the other hand, the second indication information may also be a message for determining that the terminal slice information changes. The terminal slice information includes at least one of the following: network slices supported by the terminal; a list of frequency points corresponding to network slices supported by the terminal; a list of priorities of frequency points corresponding to network slices supported by the terminal; and priorities of network slices supported by the terminal.

For example, the terminal receives the second indication information indicating the lifting of the limitation from the network device through the broadcast system message or the proprietary signaling, and determines that the first reselection limitation lifting condition is satisfied. For another example, the AS layer of the terminal receives the indication information of the NAS layer of the terminal, and it is determined that the first reselection limitation lifting condition is satisfied.

The indication information of the NAS layer can be used to indicate the terminal slice information, and the AS layer of the terminal determines that the terminal slice information changes based on the indication information, thereby determining that the first reselection limitation lifting condition is met.

F: The highest ranked cell changes.

The ranking involved in the embodiments of the present disclosure can be understood as the cell ranking determined based on the R criterion.

For example, the terminal determines that the highest ranked cell changes, and determines that the first reselection limitation lifting condition is satisfied.

G: The terminal moves out of a tracking area where it is.

For example, the terminal determines to move out of the tracking area where it is, and determines that the first reselection limitation lifting condition is met.

H: The terminal moves out of a registration area where it is.

For example, the terminal determines to move out of the registration area where it is, and determines that the first reselection limitation lifting condition is met.

I: The terminal receives a redirection message, which includes a frequency point from which the reselection limitation has been lifted.

For example, if the network device controls the terminal to redirect to a certain frequency point, and the frequency point is the frequency point where the reselection limitation has been lifted, it is determined that the first reselection limitation condition is met.

J: The PLMN selected by the terminal changes.

For example, if the terminal selects another PLMN different from the current PLMN, it is determined that the first reselection limitation lifting condition is satisfied.

K: The terminal determines that the allowed network slice selection assistance information (NSSAI) changes.

In an implementation of the embodiments of the present disclosure, the first reselection limitation on the target cell and/or the cell with the same frequency as the target cell can be directly lifted in case that it is determined that the first reselection limitation lifting condition is met.

In another implementation of the embodiments of the present disclosure, it may be further determined whether to lift the first reselection limitation executed on the target cell and/or the cell with the same frequency as the target cell in case that it is determined that the first reselection limitation lifting condition is met.

In an example, the embodiments of the present disclosure may further determine whether to lift the first reselection limitation executed on the target cell and/or the cell with the same frequency as the target cell based on the protocol, in case that it is determined that the first reselection limitation lifting condition is met. For example, it is determined to lift the first reselection limitation executed on the target cell and/or the cell with the same frequency as the target cell based on the protocol. Or, it is determined not to lift the first reselection limitation executed on the target cell and/or the cell with the same frequency as the target cell based on the protocol.

In another example, the embodiments of the present disclosure may further determine whether to lift the first reselection limitation executed on the target cell and/or the cell with the same frequency as the target cell based on the indication information sent by the network device, in case that it is determined that the first reselection limitation lifting condition is met. For example, if the terminal receives the second indication information for determining to lift the first reselection limitation, it is determined to lift the first reselection limitation executed on the target cell and/or the cell with the same frequency as the target cell.

In yet another example, when determining that the first reselection limitation lifting condition is satisfied in the embodiments of the present disclosure, the terminal may further re-determine whether the target cell and/or the cell with the same frequency as the target cell still meet the first reselection limitation condition based on the condition of executing the first reselection limitation, so as to determine whether to lift the first reselection limitation executed on the target cell and/or the cell with the same frequency as the target cell.

The first reselection limitation includes that the target cell does not support one or more network slices of the terminal.

In the embodiments of the present disclosure, when it is determined that the first reselection limitation lifting condition is met and it is determined that the first reselection limitation condition is not met, the first reselection limitation executed on the target cell and/or the cell with the same frequency as the target cell can be lifted. When it is determined that the first reselection limitation condition is satisfied, it is determined that the first reselection limitation is not lifted from the target cell and/or the cell with the same frequency as the target cell.

In the cell reselection method provided by the embodiments of the present disclosure, in case that the first reselection limitation is executed on the target cell and/or the cell with the same frequency as the target cell, it can be further determined whether to lift the the first reselection limitation executed on the target cell and/or the cell with the same frequency as the target cell.

In an example, the terminal determines that the target cell does not support one or more network slices of the terminal, and determines to execute the first reselection limitation on the target cell and/or the cell with the same frequency as the target cell. It is determined whether the first reselection limitation lifting condition is satisfied. In case that it is determined that the first reselection limitation lifting condition is met, it is determined whether to lift the first reselection limitation executed on the target cell and/or the cell with the same frequency as the target cell. In case that it is determined that the first reselection limitation lifting condition is not met, there is no need to perform the judgement of whether to lift the first reselection limitation executed on the target cell and/or the cell with the same frequency as the target cell.

In the embodiments of the present disclosure, in case that the terminal determines that the target cell does not support one or more network slices of the terminal, and determines to execute the first reselection limitation on the target cell and/or the cell with the same frequency as the target cell, the execution process of determining whether to lift the first reselection limitation executed on the target cell and/or the cell with the same frequency as the target cell can refer to the relevant description in the above embodiments, and will not be described in detail here.

In another cell reselection method provided by the embodiments of the present disclosure, when it is determined that the target cell is not the suitable cell, it may be further determined whether to reselect the target cell and/or the cell with the same frequency as the target cell.

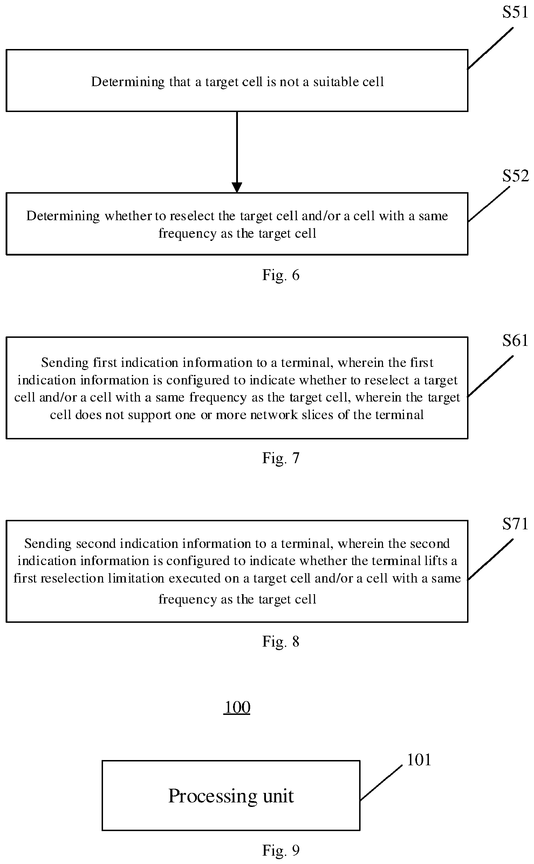

Fig. 6 is a flow chart of a cell reselection method according to an illustrative embodiment. As shown in Fig. 6, the cell reselection method is executed by a terminal and includes the following steps.

In step S51, it is determined that the target cell is not a suitable cell.

In step S52, it is determined whether to reselect the target cell and/or the cell with the same frequency as the target cell.

In the embodiments of the present disclosure, determining that the target cell is not the suitable cell may be based on the definition of the suitable cell in the standard TS38.304. When the target cell does not meet the definition of the suitable cell, it can be determined that the target cell is not the suitable cell. The definition of the suitable cell in the current standard TS38.304 includes the following.
1. For a terminal with a standalone non-public network (SNPN) access mode, if the following conditions are satisfied, the cell is considered as the suitable cell.
   A: The cell is a part of a selected PLMN or a registered PLMN or a PLMN in an equivalent PLMN list, and the PLMN satisfies that a PLMN-ID of the PLMN is broadcast by a cell that is not associated with a closed access group identifier (CAG-ID), and a single CAG (CAG-only) indication for the PLMN in the terminal is absence or wrong. The allowed CAG list for the PLMN in the terminal includes the CAG-ID broadcasted by the cell for the PLMN.
   B: The cell selection criteria are met.
   C: According to the latest information provided by the NAS, it is determined to satisfy that the cell is not prohibited, and the tracking area to which the cell belongs does not belong to a part of a list of "roaming forbidden tracking areas". The list belongs to the PLMN meeting the above item A.
2. For the terminal operating in the SNPN access mode, the cell is considered as the suitable cell if the following conditions are satisfied.
   A: The cell is a part of the SNPN selected by the terminal or the registered SNPN.
   B: The cell selection criteria are met.
   C: According to the latest information provided by NAS, it is determined to satisfy that the cell is not prohibited, and the tracking area to which the cell belongs is not part of the list of "roaming forbidden tracking areas". The list belongs to the selected SNPN or the registered SNPN of the terminal.

In the embodiments of the present disclosure, in case that it is determined that the target cell is not the suitable cell, it may be further determined whether to perform the cell reselection on the target cell and/or the cell with the same frequency as the target cell. In case that it is determined that the target cell is not the suitable cell, determining whether to perform the cell reselection on the target cell and/or the cell with the same frequency as the target cell can be done by determining whether to perform a second reselection limitation on the target cell and/or the cell with the same frequency as the target cell.

The second reselection limitation involved in the embodiments of the present disclosure is the reselection limitation performed on the target cell in case that the target cell does not meet the suitable cell in the related art, which is thus not detailed here.

In the embodiments of the present disclosure, on the one hand, in case that it is determined that the second reselection limitation is performed on the target cell and/or the cell with the same frequency as the target cell, it is determined that the target cell and/or the cell with the same frequency as the target cell will not be reselected. On the other hand, in case that it is determined that the second reselection limitation is not performed on the target cell and/or the cell with the same frequency as the target cell, it is determined that the target cell and/or the cell with the same frequency as the target cell will be reselected.

Further, in case that the second reselection limitation is performed on the target cell and/or the cell with the same frequency as the target cell in the embodiments of the present disclosure, it may be further determined whether to lift the second reselection limitation executed on the target cell and/or the cell with the same frequency as the target cell.

In the embodiments of the present disclosure, the second reselection limitation executed on the target cell and/or the cell with the same frequency as the target cell may be lifted based on a second reselection limitation lifting condition. The second reselection limitation lifting condition is a condition for lifting the reselection limitation executed on the target cell and/or the cell with the same frequency as the target cell in case that the target cell does not meet the suitable cell in the related art, which is thus not detailed here.

Based on the above embodiments, in the cell reselection method provided by the embodiments of the present disclosure, the terminal can determine whether the target cell supports one or more network slices of the terminal, and can also determine whether the target cell is the suitable cell, and execute the first reselection limitation and/or the second reselection limitation on the target cell and/or the cell with the same frequency as the target cell based on the corresponding determination result. If it is determined that the target cell supports one or more network slices of the terminal, and the target cell is the suitable cell, the terminal reselects to the target cell. The implementation process may refer to the description of the related embodiment in Fig. 2. If it is determined that the target cell does not support one or more network slices of the terminal, and/or the target cell is not the suitable cell, the reselection limitation performed on the target cell and/or the cell with the same frequency as the target cell may include the following examples.

Example 1: First, it is determined that whether the target cell supports one or more network slices of the terminal. If it is determined that the target cell does not support one or more network slices of the terminal, the first reselection limitation is performed on the target cell and/or the cell with the same frequency as the target cell. If it is determined that the target cell supports one or more network slices of the terminal, it is further determined whether the target cell is the suitable cell. If it is determined that the target cell is not the suitable cell, the second reselection limitation is performed on the target cell and/or the cell with the same frequency as the target cell.

Example 2: First, it is determined whether the target cell is the suitable cell. If it is determined that the target cell is not the suitable cell, the second reselection limitation is performed on the target cell and/or the cell with the same frequency as the target cell. If it is determined that the target cell is the suitable cell, it is further determined whether the target cell supports one or more network slices of the terminal. If it is determined that the target cell does not support one or more network slices of the terminal, the first reselection limitation is performed on the target cell and/or the cell with the same frequency as the target cell.

Example 3: The processes of determining whether the target cell supports one or more network slices of the terminal and whether the target cell is the suitable cell are performed in parallel. If it is determined that the target cell does not support one or more network slices of the terminal, the first reselection limitation is performed on the target cell and/or the cell with the same frequency as the target cell. If it is determined that the target cell is not the suitable cell, the second reselection limitation is performed on the target cell and/or the cell with the same frequency as the target cell. If it is determined that the target cell does not support one or more network slices of the terminal and it is determined that the target cell is not the suitable cell, it is determined to execute the first reselection limitation and/or the second reselection limitation on the target cell and/or the cell with the same frequency as the target cell based on the protocol or the indication information sent by the network device.

In the cell reselection method provided in the embodiments of the present disclosure, it can be determined whether to lift the first reselection limitation and/or the second reselection limitation executed on the target cell and/or the cell with the same frequency as the target cell. For example, determining whether to lift the first reselection limitation and/or the second reselection limitation performed on the target cell and/or the cell with the same frequency as the target cell may include the following examples.

Example 1: It is determined whether to lift the first reselection limitation executed on the target cell and/or the cell with the same frequency as the target cell according to the first reselection limitation lifting condition. And/or, it is determined whether to lift the second reselection limitation on the target cell and/or the cell with the same frequency as the target cell according to the second reselection limitation lifting condition.

Example 2: Based on the protocol or the indication information sent by the network device, it is determined to lift the reselection limitation executed on the target cell and/or the cell with the same frequency as the target cell according to the first reselection limitation lifting condition and/or the second reselection limitation lifting condition.

Example 3: The terminal re-determines whether the first reselection limitation condition and/or the second reselection limitation condition are satisfied. If the first reselection limitation condition is no longer satisfied, the first reselection limitation performed on the target cell and/or the cell with the same frequency as the target cell is lifted. If the second reselection limitation condition is no longer satisfied, the second reselection limitation performed on the target cell and/or the cell with the same frequency as the target cell is lifted.

Further, in the cell reselection method provided by the embodiments of the present disclosure, the terminal may further determine whether to lift the first reselection limitation and/or the second reselection limitation executed on the target cell and/or the cell with the same frequency as the target cell, in case that it is determined that the target cell does not support one or more network slices of the terminal, and/or the target cell is not the suitable cell, and the first reselection limitation and/or the second reselection limitation are performed on the target cell and/or the cell with the same frequency as the target cell. For example, the following examples may be included.

Example 1: If it is determined that the target cell does not support one or more network slices of the terminal and the first reselection limitation is performed on the target cell and/or the cell with the same frequency as the target cell, it is determined whether to lift the first reselection limitation executed on the target cell and/or the cell with the same frequency as the target cell according to the first reselection limitation lifting condition. If it is determined that the target cell is not the suitable cell, and the second reselection limitation is performed on the target cell and/or the cell with the same frequency as the target cell, it is determined whether to lift the second reselection limitation on the target cell and/or the cell with the same frequency as the target cell according to the second reselection limitation lifting condition.

Example 2: In case that it is determined that the target cell does not support one or more network slices of the terminal, and/or the target cell is not the suitable cell, and the first reselection limitation and/or the second reselection limitation are performed on the target cell and/or the cell with the same frequency as the target cell, it is determined to lift the reselection limitation performed on the target cell and/or the cell with the same frequency as the target cell according to the first reselection limitation lifting condition and/or the second reselection limitation lifting condition based on the protocol or the indication information sent by the network device.

Example 3: In case that it is determined that the target cell does not support one or more network slices of the terminal, and/or that the target cell is not the suitable cell, and the first reselection limitation and/or the second reselection limitation are performed on the target cell and/or the cell with the same frequency as the target cell, the terminal re-determines whether the first reselection limitation condition and/or the second reselection limitation condition are satisfied. If the first reselection limitation condition is no longer satisfied, the first reselection limitation performed on the target cell and/or the cell with the same frequency as the target cell is lifted. If the second reselection limitation condition is no longer satisfied, the second reselection limitation performed on the target cell and/or the cell with the same frequency as the target cell is lifted.

In the cell reselection method provided by the embodiments of the present disclosure, in case that the target cell of the terminal supports one or more network slices of the terminal and the target cell is the suitable cell, the terminal reselects to the target cell. In case that the target cell of the terminal does not support one or more network slices of the terminal, and/or the target cell of the terminal is not the suitable cell, it can be further determined whether to reselect the target cell and/or the cell with the same frequency as the target cell. Moreover, through the present disclosure, the solution of the reselection limitation and the limitation lifting of the target cell or other cells with the same frequency are realized, if the target cell cannot be accessed because it does not support the network slice of the terminal, in the cell reselection process based on the network slice.

Based on the same concept, the embodiments of the present disclosure also provide a cell reselection method executed by the network device.

Fig. 7 is a flow chart of a cell reselection method according to an illustrative embodiment, which can be executed alone or in combination with other embodiments. As shown in Fig. 7, the cell reselection method is executed by the network device and includes the following steps.

In step S61, first indication information is sent to a terminal.

The first indication information is used to indicate whether to reselect a target cell and/or a cell with a same frequency as the target cell. The target cell does not support one or more network slices of the terminal.

The target cell involved in the embodiments of the present disclosure is a target cell determined in a cell reselection process based on a frequency priority. For example, the target cell is the target cell determined in the cell reselection process based on the frequency priority related to the slice.

In an embodiment, the first indication information is also used to indicate whether the terminal performs the first reselection limitation on the target cell and/or the cell with the same frequency as the target cell.

On the one hand, the first indication information is specifically used for indicating the terminal not to reselect the target cell and/or the cell with the same frequency as the target cell when executing the first reselection limitation. On the other hand, the first indication information is specifically used to indicate the terminal to reselect the target cell and/or the cell with the same frequency as the target cell when not executing the first reselection limitation.

In an embodiment, the first reselection limitation involved in the embodiments of the present disclosure includes at least one of the following:
(1) Stopping taking the target cell as a candidate cell;
(2) Stopping taking the cell with the same frequency as the target cell as the candidate cell;
(3) Reducing a priority of the target cell;
(4) Reducing a priority of the cell with the same frequency as the target cell;
(5) Reducing a priority of a frequency point corresponding to the target cell.

Based on the contents of the first limitation, the first reselection limitation involved in the embodiments of the present disclosure may include the following examples.

Example 1: The network device sends the first indication information to indicate to stop taking the target cell as the candidate cell.

Example 2: The network device sends the first indication information to indicate to stop taking the target cell and the other cells with the same frequency as the candidate cells.

Example 3: The network device sends the first indication information to indicate to reduce the priority of the target cell.

Example 4: The network device sends the first indication information to indicate to reduce the priority of the frequency point of the target cell.

In the embodiments of the present disclosure, reducing the priority of the target cell, or reducing the priority of the cell with the same frequency as the target cell, or reducing the priority of the frequency point corresponding to the target cell can be understood as reducing the priority of the target cell, the priority of the cell with the same frequency as the target cell or the priority of the frequency point corresponding to the target cell by N levels, where N is a positive integer, for example, N is 1 or other values. In an example, in the embodiments of the present disclosure, the priority of the target cell, the priority of the cell with the same frequency as the target cell or the priority of the frequency point corresponding to the target cell can be reduced to the lowest priority, that is, minimizing the possibility that the target cell, the cell with the same frequency as the target cell or the frequency point corresponding to the target cell become the candidate cell.

In an example, the first indication information in the embodiments of the present disclosure can be used to indicate whether to stop taking the other cells with the same frequency as the candidate cells, so as to indicate whether the terminal performs the cell reselection on the target cell and/or the cell with the same frequency as the target cell.

The first indication information is a broadcast system message or a proprietary signaling.

In an implementation, the embodiments of the present disclosure may configure a corresponding first parameter for the first reselection limitation. The first parameter includes at least one of the following: a time parameter for executing the first reselection limitation on the target cell and/or the cell with the same frequency as the target cell, and/or the number of times of reselection where the first reselection limitation is executed on the target cell and/or the cell with the same frequency as the target cell.

The first parameter may include a time parameter for executing the first reselection limitation on the target cell and/or the cell with the same frequency as the target cell, and/or the number of times of reselection where the first reselection limitation is executed on the target cell and/or the cell with the same frequency as the target cell. That is, in case that it is determined to execute the first reselection limitation on the target cell and/or the cell with the same frequency as the target cell, the first reselection limitation is executed on the target cell and/or the cell with the same frequency as the target cell within the time specified by the above time parameter and/or within the number of times of reselection specified by the reselection parameter.

Fig. 8 is a flow chart of a cell reselection method according to an illustrative embodiment, and the cell reselection method can be executed alone or in combination with other embodiments. As shown in Fig. 8, the cell reselection method is executed by the network device and includes the following steps.

In step S71, second indication information is sent to a terminal, and the second indication information is used to indicate whether the terminal lifts the first reselection limitation on the target cell and/or the cell with the same frequency as the target cell.

In an embodiment, the second indication information includes at least one of the following: a system broadcast message; a proprietary signaling; and an indication information sent by a terminal non-access layer to a terminal access layer.

In an embodiment, the second indication information is also used to determine that the terminal slice information changes; or the second indication information is also used to indicate to lift the first reselection limitation.

The embodiments of the present disclosure also provide a cell reselection method. In the cell reselection method, the network device sends the first indication information and the second indication information to the terminal. The first indication information is used to indicate whether the terminal performs the cell reselection on the target cell and/or the cell with the same frequency as the target cell in case that the target cell does not support one or more network slices of the terminal. The second indication information is used to indicate whether the terminal lifts the first reselection limitation executed on the target cell and/or the cell with the same frequency as the target cell.

In an embodiment, in the cell reselection method provided by the embodiments of the present disclosure, the network device may also send the slice information supported or not supported by the target cell to the terminal, so that the terminal can determine that the target cell does not support one or more network slices of the terminal based on the slice information of the network slice supported or not supported by the target cell.

The target cell involved in the embodiments of the present disclosure is a target cell determined in a cell reselection process based on a frequency priority. For example, the target cell is the target cell determined in the cell reselection process based on the frequency priority related to the slice.

The slice information of the network slice supported or not supported by the target cell may be a network slice identifier, a network slice group identifier, or other identifiers.

It can be understood that in the cell reselection method executed by the network device provided in the embodiments of the present disclosure, the network device sends relevant parameter information for realizing the cell reselection based on the network slice, such as the first indication information, the second indication information and the slice information supported or not supported by the target cell, thus realizing that it is further determined whether to reselect the target cell and/or the cell with the same frequency as the target cell in case that the target cell of the terminal does not support one or more network slices of the terminal, and/or the target cell of the terminal is not the suitable cell. Moreover, through the present disclosure, the solution of the reselection limitation and the limitation lifting of the target cell or other cells with the same frequency are realized, if the target cell cannot be accessed because it does not support the network slice of the terminal, in the cell reselection process based on the network slice. In the solution of realizing the cell reselection by the network device, the same or similar part as that in the solution of realizing cell the reselection by the terminal will not be described here, and reference can be made to the relevant descriptions of the above embodiments.

It can be understood that the cell reselection method provided in the embodiments of the present disclosure is also applicable to the process of realizing the cell reselection through interaction between the terminal and the network device. In the process of realizing the cell reselection through interaction between the terminal and the network device, the terminal and the network device each have the functions involved in the above embodiments, so the process of realizing the cell reselection by interaction between the terminal and the network device can be referred to the relevant descriptions of the above embodiments, which will not be described in detail here.

It should be noted that those skilled in the art can understand that the above various implementations/example of the embodiments of the present disclosure can be used together with the above embodiments or independently. Whether used alone or in combination with the above embodiments, the implementation principle is similar. In the embodiments of the present disclosure, some embodiments are described as implementations used together. Those skilled in the art can understand that such illustrative description is not a limitation of the embodiments of the present disclosure.

Based on the same concept, the embodiments of the present disclosure also provide a cell reselection apparatus.

It can be understood that the cell reselection apparatus provided by the embodiments of the present disclosure includes corresponding hardware structures and/or software modules for performing various functions in order to realize the above functions. Combining the units and algorithm steps of various examples disclosed in the embodiments of the present disclosure, the embodiments of the present disclosure can be realized in the form of hardware or a combination of hardware and computer software. Whether a certain function is executed by hardware or in a manner of computer software driving hardware depends on the specific application and the design constraint condition of the technical solution. Those skilled in the art can use different methods to realize the described function for each specific application, while this realization should not be considered beyond the scope of the technical solution of the embodiments of the present disclosure.

Fig. 9 is a block diagram of a cell reselection apparatus according to an illustrative embodiment. Referring to Fig. 9, a cell reselection apparatus 100 includes a processing unit 101.

The processing unit 101 is configured to determine that a target cell does not support one or more network slices of a terminal, and determine whether to reselect the target cell and/or a cell with a same frequency as the target cell.

In an embodiment, the processing unit 101 is configured to determine whether to execute a first reselection limitation on the target cell and/or the cell with the same frequency as the target cell.

In an embodiment, the processing unit 101 is configured to determine to execute the first reselection limitation on the target cell and/or the cell with the same frequency as the target cell, and determine not to reselect the target cell and/or the cell with the same frequency as the target cell.

In an embodiment, the processing unit 101 is configured to determine not to execute the first reselection limitation on the target cell and/or the cell with the same frequency as the target cell, and determine to reselect the target cell and/or the cell with the same frequency as the target cell.

In an embodiment, the first reselection limitation includes at least one of the following: stopping taking the target cell as a candidate cell; stopping taking the cell with the same frequency as the target cell as the candidate cell; reducing a priority of the target cell; reducing a priority of the cell with the same frequency as the target cell; reducing a priority of a frequency point corresponding to the target cell.

In an embodiment, the processing unit 101 is configured to receive first indication information sent by the network device, and the first indication information is used to indicate whether the target cell and/or the cell with the same frequency as the target cell are reselected. According to the first indication information, it is determined whether to execute the first reselection limitation on the target cell and/or the cell with the same frequency as the target cell.

In an embodiment, the first reselection limitation corresponds to a first parameter, and the first parameter includes at least one of the following: a time parameter for executing the first reselection limitation on the target cell and/or the cell with the same frequency as the target cell, and the number of times of reselection where the first reselection limitation is executed on the target cell and/or the cell with the same frequency as the target cell.

In an embodiment, the processing unit 101 is further configured to determine that a first reselection limitation lifting condition is met, and determine whether to lift the first reselection limitation executed on the target cell and/or the cell with the same frequency as the target cell.

In an embodiment, the processing unit 101 is configured to re-determine whether a first reselection limitation condition is satisfied, and the first reselection limitation condition includes not supporting one or more network slices of the terminal. It is determined that the first reselection limitation condition is not satisfied. The first reselection limitation executed on the target cell and/or the cell with the same frequency as the target cell is lifted.

In an embodiment, the first reselection limitation lifting condition includes at least one of the following.

The terminal falls back to a process of cell reselection that is not based on one or more network slices. The terminal performs the cell reselection based on other network slices different from the current network slice for the cell reselection. The terminal receives a system message update indication. The terminal enters an arbitrary cell selection state. The terminal receives second indication information, and the second indication information is used to indicate whether to lift the first reselection limitation. The highest ranked cell changes. The terminal moves out of a tracking area where it is. The terminal moves out of a registration area where it is. The terminal receives a redirection message, and the redirection message includes the frequency point for which the reselection limitation has been lifted. The public land mobile network selected by the terminal changes.

In an embodiment, the second indication information is also used to determine that the terminal slice information changes. Or, the second indication information is also used to indicate to lift the first reselection limitation.

In an embodiment, the terminal slice information includes at least one of the following: a list of network slices supported by the terminal; a list of frequency points corresponding to network slices supported by the terminal; a list of priorities of frequency points corresponding to network slices supported by the terminal; and priorities of network slices supported by the terminal.

In an embodiment, the processing unit 101 is configured to receive a slice information supported or not supported by the target cell and determine that the target cell does not support one or more network slices of the terminal.

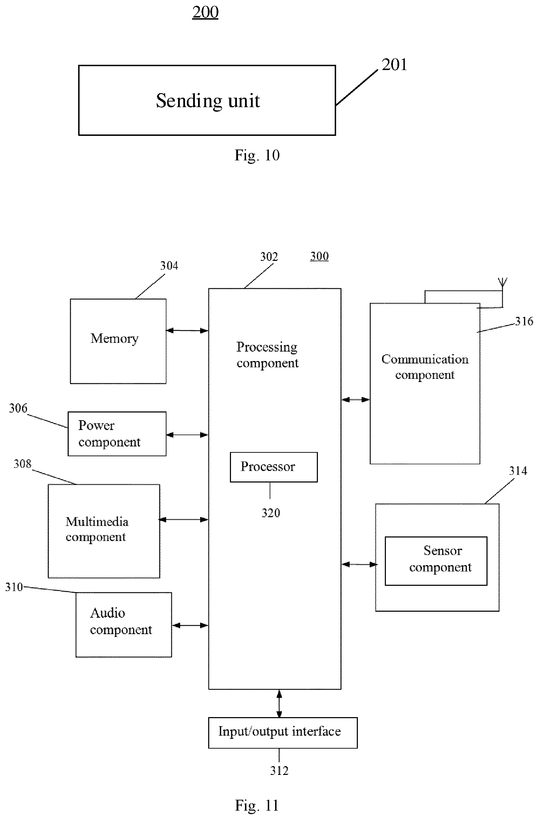

Fig. 10 is a block diagram of a cell reselection apparatus according to an illustrative embodiment. Referring to Fig. 10, a cell reselection apparatus 200 includes a sending unit 201.

The sending unit 201 is configured to send first indication information to a terminal, and the first indication information is used to indicate whether to reselect a target cell and/or a cell with a same frequency as the target cell, where the target cell does not support one or more network slices of the terminal.

In an embodiment, the first indication information is also used to indicate whether the terminal performs a first reselection limitation on the target cell and/or the cell with the same frequency as the target cell.

In an embodiment, the first indication information is specifically used to indicate the terminal not to reselect the target cell and/or the cell with the same frequency as the target cell when executing the first reselection limitation.

In an embodiment, the first indication information is specifically used to indicate the terminal to reselect the target cell and/or the cell with the same frequency as the target cell when not executing the first reselection limitation.

In an embodiment, the first reselection limitation includes at least one of the following: stopping taking the target cell as a candidate cell; stop taking the cell with the same frequency as the target cell as the candidate cell; reducing a priority of the target cell; reducing a priority of the cell with the same frequency as the target cell; reducing a priority of a frequency point corresponding to the target cell.

In an embodiment, the first reselection limitation corresponds to a first parameter, and the first parameter includes at least one of the following: a time parameter of executing the first reselection limitation on the target cell and/or the cell with the same frequency as the target cell, and the number of times of reselection where the first reselection limitation is executed on the target cell and/or the cell with the same frequency as the target cell.

In an embodiment, the sending unit 201 is further configured to send second indication information to the terminal, and the second indication information is used to indicate whether to lift the first reselection limitation.

In an embodiment, the second indication information is also used to determine that terminal slice information changes. Or, the second indication information is also used to indicate to lift the first reselection limitation.

In an embodiment, the sending unit 201 is further configured to send a slice information supported or not supported by the target cell.

Regarding the apparatuses in the above embodiments, the specific way in which each module performs operations has been described in detail in the embodiments of the relevant method, which will not be described in detail here.

Fig. 11 is a block diagram of an apparatus for cell reselection according to an illustrative embodiment. For example, an apparatus 300 can be provided as a terminal, which can be a mobile phone, a computer, a digital broadcasting terminal, a messaging device, a game console, a tablet device, a medical device, a fitness device, a personal digital assistant and the like.

Referring to Fig. 11, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the apparatus 300, such as operations associated with display, telephone call, data communication, camera operation and recording operation. The processing component 302 may include one or more processors 320 to execute instructions to complete all or part of the steps of the method described above. In addition, the processing component 302 can include one or more modules to facilitate the interaction between the processing component 302 and other components. For example, the processing component 302 can include a multimedia module to facilitate interaction between the multimedia component 308 and the processing component 302.

The memory 304 is configured to store various types of data to support operations at the apparatus 300. Examples of these data include instructions for any application or method operating on the apparatus 300, contact data, phone book data, messages, pictures, videos, etc. The memory 304 can be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 306 provides power to various components of the apparatus 300. The power component 306 may include a power management system, one or more power sources, and other components associated with generating, managing and distributing power for the apparatus 300.

The multimedia component 308 includes a screen that provides an output interface between the apparatus 300 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 308 includes a front camera and/or a rear camera. When the apparatus 300 is in an operation mode, such as shooting mode or video mode, the front camera and/or the rear camera can receive external multimedia data. Each front camera and rear camera can be a fixed optical lens system or have a focal length and an optical zoom capability.

The audio component 310 is configured to output and/or input audio signals. For example, the audio component 310 includes a microphone (MIC), which is configured to receive external audio signals when the apparatus 300 is in an operation mode, such as a call mode, a recording mode and a voice recognition mode. The received audio signal may be further stored in the memory 304 or transmitted via the communication component 316. In some embodiments, the audio component 310 further includes a speaker for outputting audio signals.

The I/O interface 312 provides an interface between the processing component 302 and peripheral interface modules, and the peripheral interface modules can be keyboards, click wheels, buttons, etc. These buttons may include, but are not limited to, a home button, a volume button, a start button and a lock button.

The sensor component 314 includes one or more sensors for providing various aspects of status assessment for the apparatus 300. For example, the sensor component 314 can detect the open/closed state of the apparatus 300, the relative positioning of the components, such as the display and keypad of the apparatus 300, the position change of the apparatus 300 or a component of the apparatus 300, the presence or absence of user contact with the apparatus 300, the orientation or acceleration/deceleration of the apparatus 300 and the temperature change of the apparatus 300. The sensor component 314 may include a proximity sensor configured to detect the presence of a nearby object without any physical contact. The sensor component 314 may also include an optical sensor, such as a CMOS or CCD image sensor, for use in imaging applications. In some embodiments, the sensor assembly 314 may further include an acceleration sensor, a gyro sensor, a magnetic sensor, a pressure sensor or a temperature sensor.

The communication component 316 is configured to facilitate wired or wireless communication between the apparatus 300 and other devices. The apparatus 300 can access a wireless network according to a communication standard, such as WiFi, 2G or 3G, or a combination thereof. In an illustrative embodiment, the communication component 316 receives a broadcast signal or broadcast related information from an external broadcast management system via a broadcast channel. In an illustrative embodiment, the communication component 316 further includes a near field communication (NFC) module to facilitate short-range communication. For example, the NFC module can be implemented according to radio frequency identification (RFID) technology, infrared data association (IrDA) technology, ultra-wideband (UWB) technology, Bluetooth (BT) technology and other technologies.

In an illustrative embodiment, the apparatus 300 may be implemented by one or more application specific integrated circuits (ASIC), digital signal processors (DSP), digital signal processing device (DSPD), programmable logic devices (PLD), field programmable gate arrays (FPGA), controllers, microcontrollers, microprocessors or other electronic elements, for performing the above methods.

In the illustrative embodiment, there is also provided a non-transitory computer-readable storage medium including instructions, such as the memory 304 including instructions, and the above instructions can be executed by the processor 320 of the apparatus 300 to complete the above methods. For example, the non-transitory computer-readable storage medium can be ROM, random access memory (RAM), CD-ROM, magnetic tape, floppy disk, optical data storage device, etc.

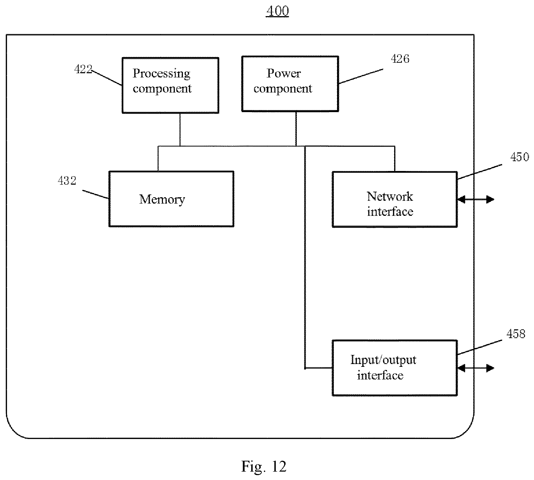

Fig. 12 is a block diagram of an apparatus 400 for cell reselection according to an illustrative embodiment. For example, the apparatus 400 can be provided as a network device, such as a base station. Referring to Fig. 12, the apparatus 400 includes a processing component 422, which further includes one or more processors, and memory resources represented by a memory 432 for storing instructions, such as application programs, executable by the processing component 422. The application program stored in the memory 432 may include one or more modules each corresponding to a set of instructions. Furthermore, the processing component 422 is configured to execute instructions to perform the above methods.

The apparatus 400 may also include a power component 426 configured to perform power management of the apparatus 400, a wired or wireless network interface 450 configured to connect the apparatus 400 to a network, and an input/output (I/O) interface 458. The apparatus 400 can operate according to an operating system stored in the memory 432, such as Windows ServerTM, Mac OS XTM, UnixTM, LinuxTM, FreeBSDTM or the like.

In the illustrative embodiment, there is also provided a non-transitory computer-readable storage medium including instructions, such as the memory 432 including instructions, and the above instructions can be executed by the processing component 422 of the apparatus 400 to complete the above methods. For example, the non-transitory computer-readable storage medium can be ROM, random access memory (RAM), CD-ROM, magnetic tape, floppy disk, optical data storage device, etc.

It can be further understood that "a plurality of" in the present disclosure refers to two or more than two, and other quantifiers are similar. "And/or", which describes the relationship of related objects, means that there can be three kinds of relationships. For example, A and/or B can mean three cases, that is, A exists alone, A and B exist together, and B exists alone. The character "/" generally means that the associated former and latter objects have an "or" relationship. The singular forms "a/an", "said" and "the" are also intended to include the plural forms, unless the context clearly expresses other meaning.

It is further understood that the terms "first" and "second" are used to describe various information, while these information should not be limited to these terms. These terms are only used to distinguish the same type of information from each other and do not indicate a specific order or importance. In fact, the expressions "first" and "second" can be used interchangeably. For example, without departing from the scope of the present disclosure, the first information may also be called the second information, and similarly, the second information may also be called the first information.

It can be further understood that although the operations are described in a specific order in the drawings in the embodiments of the present disclosure, it should not be understood as requiring that these operations be executed in the specific order or serial order shown, or that all the operations shown should be executed to obtain the desired results. In certain circumstances, multitasking and parallel processing may be beneficial.

Other embodiments of the present disclosure will easily occur to those skilled in the art after considering the specification and practicing the content disclosed herein. The application is intended to cover any variations, uses or adaptations of the present disclosure, which follow the general principles of the present disclosure and include common sense or common technical means in the related art that are not disclosed in the present disclosure. The specification and examples are to be regarded as illustrative only, with the true scope and spirit of the present disclosure being indicated by the following claims.

It should be understood that the present disclosure is not limited to the precise structure described above and shown in the drawings, and various modifications and changes can be made without departing from its scope. The scope of the present disclosure is limited only by the scope of the appended claims.

## Claims

1. A cell reselection method, executed by a terminal, comprising:
determining that a target cell does not support one or more network slices of the terminal; and
determining whether to reselect the target cell and/or a cell with a same frequency as the target cell.

2. The cell reselection method according to claim 1, wherein the determining whether to reselect the target cell and/or the cell with the same frequency as the target cell comprises:
determining whether to execute a first reselection limitation on the target cell and/or the cell with the same frequency as the target cell.

3. The cell reselection method according to claim 2, wherein the determining whether to execute the first reselection limitation on the target cell and/or the cell with the same frequency as the target cell comprises:
determining to execute the first reselection limitation on the target cell and/or the cell with the same frequency as the target cell; and
determining not to reselect the target cell and/or the cell with the same frequency as the target cell.

4. The cell reselection method according to claim 2, wherein the determining whether to execute the first reselection limitation on the target cell and/or the cell with the same frequency as the target cell comprises:
determining not to execute the first reselection limitation on the target cell and/or the cell with the same frequency as the target cell; and
determining to reselect the target cell and/or the cell with the same frequency as the target cell.

5. The cell reselection method according to claim 2, wherein the first reselection limitation comprises at least one of the following:
stopping taking the target cell as a candidate cell;
stopping taking the cell with the same frequency as the target cell as the candidate cell;
reducing a priority of the target cell;
reducing a priority of the cell with the same frequency as the target cell; and
reducing a priority of a frequency point corresponding to the target cell.

6. The cell reselection method according to claim 2, wherein the determining whether to execute the first reselection limitation on the target cell and/or the cell with the same frequency as the target cell comprises:
receiving first indication information sent by a network device, wherein the first indication information is configured to indicate whether to reselect the target cell and/or the cell with the same frequency as the target cell; and
determining whether to execute the first reselection limitation on the target cell and/or the cell with the same frequency as the target cell according to the first indication information.

7. The cell reselection method according to claim 2, wherein the first reselection limitation corresponds to a first parameter, and the first parameter comprises at least one of the following:
a time parameter for executing the first reselection limitation on the target cell and/or the cell with the same frequency as the target cell; and
the number of times of reselection where the first reselection limitation is executed on the target cell and/or the cell with the same frequency as the target cell.

8. The cell reselection method according to claim 2, wherein the method further comprises:
determining that a first reselection limitation lifting condition is satisfied; and
determining whether to lift the first reselection limitation executed on the target cell and/or the cell with the same frequency as the target cell.

9. The cell reselection method according to claim 8, wherein the determining whether to lift the first reselection limitation executed on the target cell and/or the cell with the same frequency as the target cell comprises:
re-determining whether a first reselection limitation condition is satisfied, wherein the first reselection limitation condition comprises not supporting the one or more network slices of the terminal;
determining that the first reselection limitation condition is not satisfied; and
lifting the first reselection limitation executed on the target cell and/or the cell with the same frequency as the target cell.

10. The cell reselection method according to claim 8, wherein the first reselection limitation lifting condition comprises at least one of the following:
the terminal falls back to a process of cell reselection which is not based on the one or more network slices;
the terminal performs cell reselection based on other network slices different from a current network slice for cell reselection;
the terminal receives a system message update indication;
the terminal enters an arbitrary cell selection state;
the terminal receives second indication information, wherein the second indication information is configured to indicate whether to lift the executed first reselection limitation;
a highest ranked cell changes;
the terminal moves out of a tracking area where the terminal is;
the terminal move out of a registration area where the terminal is;
the terminal receives a redirection message, wherein the redirection message comprises a frequency point for which the reselection limitation has been lifted; and
a public land mobile network selected by the terminal changes.

11. The cell reselection method according to claim 10, wherein,
the second indication information is also configured to determine that terminal slice information changes; or
the second indication information is also configured to indicate to lift the first reselection limitation.

12. The cell reselection method according to claim 11, wherein the terminal slice information comprises at least one of the following:
a list of network slices supported by the terminal;
a list of frequency points corresponding to the network slices supported by the terminal;
a list of priorities of frequency points corresponding to the network slices supported by the terminal; and
priorities of the network slices supported by the terminal.

13. The cell reselection method according to claim 1, wherein the determining that the target cell does not support the one or more network slices of the terminal comprises:
receiving a slice information supported or not supported by the target cell; and
determining that the target cell does not support the one or more network slices of the terminal.

14. A cell reselection method, executed by a network device, comprising:
Sending first indication information to a terminal, wherein the first indication information is configured to indicate whether to reselect a target cell and/or a cell with a same frequency as the target cell, wherein the target cell does not support one or more network slices of the terminal.

15. The cell reselection method according to claim 14, wherein the first indication information is further configured to indicate whether the terminal executes a first reselection limitation on the target cell and/or the cell with the same frequency as the target cell.

16. The cell reselection method according to claim 15, wherein the first indication information is specifically configured to indicate the terminal not to reselect the target cell and/or the cell with the same frequency as the target cell when the terminal executes the first reselection limitation.

17. The cell reselection method according to claim 15, wherein the first indication information is specifically configured to indicate the terminal to reselect the target cell and/or the cell with the same frequency as the target cell when the terminal does not execute the first reselection limitation.

18. The cell reselection method according to claim 15, wherein the first reselection limitation comprises at least one of the following:
stopping taking the target cell as a candidate cell;
stopping taking the cell with the same frequency as the target cell as the candidate cell;
reducing a priority of the target cell;
reducing a priority of the cell with the same frequency as the target cell; and
reducing a priority of a frequency point corresponding to the target cell.

19. The cell reselection method according to claim 15, wherein the first reselection limitation corresponds to a first parameter, and the first parameter comprises at least one of the following:
a time parameter for executing the first reselection limitation on the target cell and/or the cell with the same frequency as the target cell; and
the number of times of reselection where the first reselection limitation is executed on the target cell and/or the cell with the same frequency as the target cell.

20. The cell reselection method according to claim 15, wherein the method further comprises:
Sending second indication information to the terminal, wherein the second indication information is configured to indicate whether to lift the executed first reselection limitation.

21. The cell reselection method according to claim 20, wherein,
the second indication information is also configured to determine that terminal slice information changes; or
the second indication information is also configured to indicate to lift the first reselection limitation.

22. The cell reselection method according to claim 14, wherein the method further comprises:
sending a slice information supported or not supported by the target cell.

23. A cell reselection apparatus, comprising:
a processing unit configured to determine that a target cell does not support one or more network slices of a terminal,
wherein the processing unit is further configured to determine whether to reselect the target cell and/or a cell with a same frequency as the target cell.

24. A cell reselection apparatus, comprising:
a sending unit configured to send first indication information to a terminal, wherein the first indication information is configured to indicate whether to reselect a target cell and/or a cell with a same frequency as the target cell, wherein the target cell does not support one or more network slices of the terminal.

25. A communication apparatus, comprising:
a processor; and
a memory for storing instructions executable by the processor,
wherein the processor is configured to execute a method of any one of claims 1 to 13.

26. A communication apparatus, comprising:
a processor; and
a memory for storing instructions executable by the processor,
wherein the processor is configured to execute a method of any one of claims 14 to 22.

27. A storage medium, wherein instructions are stored in the storage medium, and when the instructions in the storage medium are executed by a processor of a terminal, the terminal is enabled to execute a cell reselection method according to any one of claims 1 to 13.

28. A storage medium, wherein instructions are stored in the storage medium, when the instructions in the storage medium are executed by a processor of a network device, the network device is enabled to execute a cell reselection method according to any one of claims 14 to 22.
